(19) Europäisches Patentamt / European Patent Office / Office européen des brevets

(11) **EP 4 624 418 A1**

(12) **DEMANDE DE BREVET EUROPEEN**

(43) Date de publication:
**01.10.2025 Bulletin 2025/40**

(21) Numéro de dépôt: **25166889.3**

(22) Date de dépôt: **28.03.2025**

(51) Classification Internationale des Brevets (IPC):
**C01B 25/45** (2006.01)   **H01M 4/02** (2006.01)
**H01M 4/50** (2010.01)   **H01M 4/52** (2010.01)

(52) Classification Coopérative des Brevets (CPC):
**C01B 25/45; H01M 4/02; H01M 4/50; H01M 4/52;**
C01P 2002/72; C01P 2002/76; C01P 2002/77;
C01P 2006/40

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **28.03.2024 FR 2403213**

(71) Demandeurs:
• **Commissariat à l'Energie Atomique et aux Energies Alternatives**
**75015 Paris (FR)**
• **Centre National de la Recherche Scientifique**
**75016 Paris Cedex 16 (FR)**

• **Université de Picardie Jules Verne**
**80025 Amiens Cedex 1 (FR)**

(72) Inventeurs:
• **GREBENSHCHIKOVA, Anastasia**
**33608 Pessac (FR)**
• **CROGUENNEC, Laurence**
**33608 Pessac (FR)**
• **MASQUELIER, Christian**
**80000 Amiens (FR)**
• **SIMONIN, Loïc**
**38054 Grenoble cedex 09 (FR)**
• **OLCHOWKA, Jacob**
**33608 Pessac (FR)**

(74) Mandataire: **Ipsilon**
**11 rue Saint-Georges**
**75009 Paris (FR)**

(54) **MATÉRIAU DE STRUCTURE ALLUAUDITE POUR ÉLECTRODE DE BATTERIE**

(57) Matériau de structure cristallographique de type alluaudite de formule

$$A_{3-\delta 1}M_{2+\delta 2}(PO_4)_n(SO_4)_m$$

dans laquelle :
- M est un métal de transition choisi parmi le fer (Fe), le manganèse (Mn), le cobalt (Co), le nickel (Ni) et leurs mélanges,
- A est un alcalin choisi parmi le sodium (Na), le lithium (Li), le potassium (K) et leurs mélanges,
- le degré d'oxydation moyen d du métal de transition M étant compris entre +2 et +2,30,
- n, m, δ1 et δ2 étant des coefficients qui remplissent les conditions suivantes :
∘

$$0 \leq \delta 1 \leq 0,50,$$

∘

$$0 \leq \delta 2 \leq 0,30$$

et
∘

$$n + m = 3$$

avec n > 0 et m > 0.

EP 4 624 418 A1

Processed by Luminess, 75001 PARIS (FR)

**Fig.1**

**Description**

**Domaine technique**

La présente invention concerne un matériau de structure alluaudite destiné à former une électrode de batterie, notamment d'une batterie sodium-ion. Elle concerne aussi un procédé de fabrication d'un tel matériau.

**Technique antérieure**

Les matériaux polyanioniques cristallins sont des matériaux d'intérêt pour l'industrie des batteries, notamment pour former une électrode positive d'une batterie sodium-ion, lithium-ion ou potassium-ion. Parmi eux, les matériaux de structure alluaudite et NASICON sont prometteurs, grâce notamment à une haute tension de fonctionnement et une stabilité chimique et thermique lors des cycles de charge et décharge.

Il est connu de Richardson et al., Journal of Power Sources, 2003, vol. 119 121, pp. 262-265 que des matériaux alluaudites phosphatés contenant du sodium (Na) comme $Na_2FeMn_2(PO_4)_3$ et $LiNaFeMn_2(PO_4)_3$ présentent une activité électrochimique. Il est également connu de Barpanda et al., Nat Commun, 2014, 5, 5:4358 qu'un matériau alluaudite sulfaté de formule $Na_2Fe_2(SO_4)_3$ possède la plus grande différence de potentiel avec Li pour le couple $Fe^{2+}/Fe^{3+}$, tout en délivrant une capacité de plus de 100 mAh/g. Plusieurs méthodes sont connues pour synthétiser des matériaux de structure alluaudite, comme la synthèse en voie solide assistée par broyage pour bien mélanger les précurseurs solides, des synthèses par chimie douce comme la méthode Pechini, la synthèse ionothermale ou encore la synthèse hydrothermale. Cependant, malgré l'éventail de méthodes connues pour la synthèse de matériaux alluaudites, les réactions complètes sont difficiles à obtenir. Autrement dit, les matériaux connus contiennent des impuretés et/ou sont de compositions non-stochiométriques.

Il est connu de J. Lu et al. Chemistry of Materials, 2017, 29, 3597-3602 un matériau alluaudite phosphaté et sulfaté de formule $Na_xFe_y(PO_4)_{3-z}(SO_4)_z$. Pour z=2 le matériau présente une composition $Na_{2.37}Fe_{2.15}PO_4(SO_4)_2$ avec environ 15 % d'ions $Fe^{3+}$. La synthèse de ce matériau nécessite sept pré-précurseurs et la mise en œuvre de six réactions, consistant à former deux phases intermédiaires, précurseurs à leur tour, $Na_2Fe_3(PO_4)_3$ et $Na_{2.56}Fe_{1.72}(SO_4)_3$, et ne permettant pas d'assurer que l'intégralité des ions fer soient dans un état d'oxydation +2. L'application de la synthèse de ce matériau de structure $Na_{2.37}Fe_{2.15}PO_4(SO_4)_2$ de structure alluaudite à un contexte industriel pour la fabrication d'électrodes de batteries est rendue complexe par le nombre de précurseurs et de réactions nécessaires à mettre en œuvre. Le contrôle du degré d'oxydation du fer dans un état +2 permet d'obtenir des électrodes avec une capacité théorique optimale.

Il existe donc un besoin pour un matériau cristallin de structure alluaudite phosphaté et sulfaté, comportant un métal de transition oxydable et un métal alcalin pouvant être désintercalé et réintercalé réversiblement de la structure hôte, et avec un procédé de fabrication de ce matériau qui puisse être mis en œuvre industriellement de façon simple.

**Exposé de l'invention**

L'invention concerne un matériau de structure cristallographique alluaudite de formule

$$A_{3-\delta1}M_{2+\delta2}(PO_4)_n(SO_4)_m$$

dans laquelle :

- M est un métal de transition choisi parmi le fer (Fe), le manganèse (Mn), le cobalt (Co), le nickel (Ni) et leurs mélanges,
- A est un alcalin choisi parmi le sodium (Na), le lithium (Li), le potassium (K) et leurs mélanges,
- le degré d'oxydation moyen d du métal de transition M étant compris entre +2 et +2,30,
- n, m, $\delta1$ et $\delta2$ sont des coefficients qui remplissent les conditions suivantes :

  ○

$$0 \leq \delta1 \leq 0,50,$$

  ○

$$0 \leq \delta2 \leq 0,30$$

et

$\circ$

$$n + m = 3$$

avec n > 0 et m > 0.

Avantageusement, le matériau selon l'invention permet de produire une électrode présentant un bon comportement à la charge et à la décharge, et au fil du cyclage de la batterie, ainsi qu'une bonne capacité, notamment liée au degré d'oxydation du métal de transition tel que selon l'invention.

Avantageusement, le matériau selon l'invention permet de produire une électrode qui présente une bonne stabilité chimique et thermique lors des cycles de charge et décharge.

L'invention concerne également un procédé de fabrication comprenant :

a) la préparation d'une charge de départ comportant, à titre de constituants, des groupes phosphates $PO_4$, des groupes sulfates $SO_4$, le métal alcalin A et le métal de transition M,

b) la mise en œuvre, sous atmosphère inerte, d'au moins une technique choisie parmi un broyage, notamment un broyage à haute énergie, un frittage et une synthèse ionothermale, pour faire réagir entre eux les constituants de la charge de départ jusqu'à obtention d'un matériau, la composition de la charge de départ à l'étape a) étant déterminée de telle sorte que le matériau obtenu à l'étape b) est selon l'invention.

Le procédé selon l'invention permet de s'affranchir de l'étape de préparation de précurseurs à partir de pré-précurseurs réduisant ainsi le nombre d'étapes ou de réactions nécessaires pour la synthèse d'un matériau de structure cristallographique alluaudite selon l'invention.

Par ailleurs, l'invention concerne une cathode de batterie, notamment choisie parmi une cathode de batterie lithium-ion (Li-ion), une cathode de batterie sodium-ion (Na-ion), une cathode de batterie potassium-ion (K-ion), une cathode de batterie au lithium (Li), une cathode de batterie au sodium (Na) et une cathode de batterie au potassium (K), ladite cathode de batterie comportant le matériau selon l'invention ou obtenu selon le procédé de l'invention.

Enfin, l'invention concerne une batterie, de préférence choisie parmi une batterie lithium-ion (Li-ion), une batterie sodium-ion (Na-ion), une batterie potassium-ion (K-ion), une batterie au sodium (Na), une batterie au lithium (Li), une batterie au potassium (K), la batterie comportant une cathode de batterie selon l'invention.

L'expression « compris entre A et B » est strictement équivalente à « supérieur ou égal à A et inférieur ou égal à B ».

**Matériau**

La structure alluaudite est une structure décrite dans le groupe d'espace C2/c, comme décrit par exemple dans J. Lu et al. Chemistry of Materials, 2017, 29, 3597-3602, après avoir été proposée pour la première fois comme une possible alternative au groupe d'espace $P2_1/c$ dans Barpanda et al. Nat Commun, 2014, 5, :4358.

De préférence, le métal de transition M est choisi parmi le fer (Fe), le manganèse (Mn), le cobalt (Co), le nickel (Ni) et leurs mélanges. En particulier M peut être le fer (Fe) ou le manganèse (Mn). De préférence, M est le fer (Fe).

De préférence, le métal alcalin A est choisi parmi le sodium (Na), le lithium (Li), le potassium (K) et leurs mélanges. A est préférentiellement le sodium (Na).

Notamment, n et m sont des réels. En particulier, n et m peuvent être des entiers. De préférence n est égal à 1 et m est égal à 2.

Selon la variante où le métal de transition M est un mélange d'au moins deux métaux choisis parmi Fe, Mn, Co et Ni, le « degré d'oxydation moyen » d du métal de transition M est la moyenne arithmétique des degrés d'oxydation de chacun desdits métaux. Par exemple, si M est un mélange de Fe et Mn, le degré d'oxydation moyen de M est la moyenne arithmétique du degré d'oxydation du fer et du degré d'oxydation de Mn. Bien évidemment, selon la variante où le métal de transition M est un unique métal, son degré d'oxydation moyen d est égal à son degré d'oxydation.

De préférence, le degré d'oxydation moyen d du métal de transition est inférieur ou égal à +2,20, voire inférieur ou égal à +2,14, voire inférieur ou égal à +2,08.

$\delta_1$ peut être supérieur ou égale à 0,10, voire supérieur ou égale à 0,20, voire supérieur ou égale à 0,30, voire supérieur ou égale à 0,40.

$\delta_1$ peut être inférieur ou égale à 0,50, voire inférieur ou égale à 0,40, voire inférieur ou égale à 0,30, voire inférieur ou égale à 0,20, voire inférieur ou égale à 0,10.

δ2 peut être supérieur ou égale à 0,05, voire supérieur ou égale à 0,10, voire supérieur ou égale à 0,15, voire supérieur ou égale à 0,20, voire supérieur ou égale à 0,25.

δ2 peut être inférieur ou égale à 0,25, voire inférieur ou égale à 0,20, voire inférieur ou égale à 0,15, voire inférieur ou égale à 0,10, voire inférieur ou égale à 0,05.

De préférence, le coefficient δ1 est égal à deux fois le coefficient δ2.

Le matériau peut être obtenu par le procédé de fabrication d'un matériau selon l'invention, notamment tel que décrit ci-après.

**Procédé**

La charge de départ peut comporter, à titre de constituants, $A(OH)$ et $H_3PO_4$.

Le rapport du nombre de moles du métal alcalin A sur la somme du nombre de moles des groupes phosphates $PO_4$ et des groupes sulfates $SO_4$ dans la charge de départ peut être compris entre 0,8 et 1,2, notamment entre 0,9 et 1,1.

Le rapport du nombre de moles du métal de transition M sur la somme du nombre de moles des groupes phosphates $PO_4$ et des groupes sulfates $SO_4$, dans la charge de départ peut être compris entre 0,5 et 0,8.

Selon une variante préférée, les constituants de la charge de départ comportent un précurseur phosphaté comportant des groupes phosphates $PO_4$ et le métal alcalin A et un précurseur sulfaté comportant des groupes sulfates $SO_4$ et le métal de transition M. A l'étape b), la mise en œuvre de la technique fait réagir entre eux le précurseur sulfaté et le précurseur phosphaté.

En particulier, le précurseur phosphaté peut consister en des groupes phosphates $PO_4$ et le métal alcalin A et le précurseur sulfaté peut consister en des groupes sulfates $SO_4$ et le métal de transition M.

De préférence, le précurseur phosphaté est dépourvu de Fer, avantageusement dépourvu de métal de transition M et le précurseur sulfaté est dépourvu de Na, avantageusement dépourvu de métal alcalin.

Le rapport molaire $A/PO_4$ du nombre de moles du métal alcalin sur le nombre de moles de groupes phosphates $PO_4$ dans le précurseur phosphaté peut être compris entre 1 et 3, notamment égal à 3.

Le rapport molaire $M/SO_4$ du nombre de moles du métal alcalin sur le nombre de moles de groupes sulfates $SO_4$ dans le précurseur sulfaté peut être compris entre 1 et 2, notamment égal à 1.

Le rapport molaire $A/PO_4$ du nombre de moles du métal alcalin sur le nombre de moles de groupes phosphates $PO_4$ dans le précurseur phosphaté peut être compris entre 1 et 3, notamment égal à 3 et le rapport molaire $M/SO_4$ du nombre de moles du métal alcalin sur le nombre de moles de groupes sulfates $SO_4$ dans le précurseur sulfaté peut être compris entre 1 et 2, notamment égal à 1. Le précurseur phosphaté peut être de formule $A_3PO_4$.

Selon la variante où A est Na, le précurseur phosphaté peut être $Na_3PO_4$.

Selon la variante où A est Li, le précurseur phosphaté peut être $Li_3PO_4$.

Selon la variante où A est K, le précurseur phosphaté peut être $K_3PO_4$.

Selon la variante où A est un mélange d'au moins deux alcalins parmi Na, Li et K, le précurseur phosphaté peut être un mélange d'au moins deux composés parmi $Na_3PO_4$, $Li_3PO_4$, et $K_3PO_4$ respectivement.

Le précurseur sulfaté peut être de formule $MSO_4$.

Selon la variante où M est Fe, le précurseur sulfaté peut être $FeSO_4$.

Selon la variante où M est Mn, le précurseur sulfaté peut être $MnSO_4$.

Selon la variante où M est Co, le précurseur sulfaté peut être $CoSO_4$.

Selon la variante où M est Ni, le précurseur sulfaté peut être $NiSO_4$.

Selon la variante où M est un mélange d'au moins deux métaux parmi Fe, Mn, Co et Ni, le précurseur sulfaté peut être un mélange d'au moins deux composés parmi $FeSO_4$, $MnSO_4$, $CoSO_4$ et $NiSO_4$ respectivement.

Le précurseur sulfaté peut être déshydraté. De préférence, il est déshydraté préalablement à la mise en œuvre de l'étape a). La déshydratation du précurseur hydraté est réalisée sous atmosphère inerte. Elle peut être réalisée à une température comprise entre 150°C et 400°C, notamment 250°C pendant une durée supérieure à 2 h, notamment 3 h.

A l'étape a), la charge de départ peut comporter, voire consister en, un mélange des précurseurs sulfatés déshydratés et phosphatés, en particulier formé à partir d'une poudre comportant, voire consistant en, des particules faites du précurseur sulfaté et d'une poudre comportant, voire consistant en, des particules faites du précurseur phosphaté.

A l'étape b), l'atmosphère est inerte, ce qui permet de limiter l'oxydation du métal de transition. Elle est de préférence formée d'argon (Ar).

L'étape b) peut comporter ou consister en un broyage de la charge de départ. Cela permet d'obtenir des particules primaires de faible taille, par exemple inférieure à 0.1 μm, particulièrement bien adaptées à une application électrochimique. Par ailleurs, cette technique présente l'avantage d'une mise en œuvre simple.

Le broyage pour mélanger les constituants de la charge de départ notamment les précurseurs phosphaté et sulfaté, peut être effectué dans un broyeur à billes, un broyeur planétaire ou un broyeur à rouleaux. La synthèse par broyage peut être effectuée dans un broyeur planétaire à haute énergie.

De préférence, le mélange par broyage peut être effectué dans un broyeur à billes, pendant une durée comprise entre 0.5 h et 5 h, par exemple 1 h. Le rapport de la masse des billes sur la masse de la charge de départ, notamment sur la masse totale des précurseurs phosphaté et sulfaté, peut être compris entre 7 et 30, par exemple égal à 20.

De préférence, la synthèse par broyage est réalisée avec un broyeur planétaire à haute énergie, pendant une durée comprise entre 3 h et 40 h, par exemple égale à 10 h.

L'étape b) peut comporter un recuit postérieurement au broyage. Notamment, le procédé peut comporter la préparation d'une préforme par compactage de la charge de départ broyée, puis le recuit de la préforme. Le matériau est ainsi rapidement formé. En outre, il peut être aisément transformé par la suite, par exemple en mettant en œuvre un broyage additionnel pour former une poudre.

De préférence, le recuit est réalisé à une température comprise entre 370 °C et 480°C, par exemple 450 °C et pendant une durée comprise entre 7 et 26 h, de préférence 8 et 19 h, par exemple 15 h.

De préférence, le frittage est postérieur au broyage, le procédé comportant notamment la préparation d'une préforme par compactage de la charge de départ broyée et le frittage de la préforme.

La mise en œuvre de l'étape b) peut comporter une synthèse ionothermale à partir de la charge de départ, optionnellement broyée. En adaptant les paramètres de la synthèse ionothermale, il est possible de modifier la morphologie des particules du matériau obtenu.

De préférence, la synthèse ionothermale comporte la dispersion de la charge de départ, optionnellement broyée, dans un solvant ionique, étant par exemple le 1-Ethyl-2,3-dimethylimidazolium-bis(trifluoromethanesulfonyl)imide, et le chauffage de la dispersion à une température comprise entre 160°C et 250°C, par exemple égale à 250°C, et pendant une durée comprise entre 5 h et 48 h, par exemple 24 h. Le solvant ionique peut être réutilisé.

**Exemples**

Les exemples non limitatifs suivants sont donnés dans le but d'illustrer l'invention.

Dans les exemples, on a employé les matières premières suivantes :

- précurseur phosphaté : poudre de $Na_3PO_4$ de référence 04277 commercialisée par la société Sigma-Aldrich ;
- précurseur sulfaté et hydraté : poudre de $FeSO_4 \cdot 7H_2O$ de référence F7002 commercialisée par la société Sigma-Aldrich.

Dans tous les exemples selon l'invention, le précurseur sulfaté a d'abord été déshydraté dans un four sous argon ou au four sous vide (Buchi) à une température de 250 °C pendant 3 heures jusqu'à obtention de $FeSO_4$ déshydraté.

Par ailleurs les matériaux obtenus ont été caractérisés par diffraction des rayons X pour confirmer la formation d'une structure alluaudite, au moyen d'un diffractomètre de référence D8 Discover avec la source de Mo commercialisée par la société Bruker.

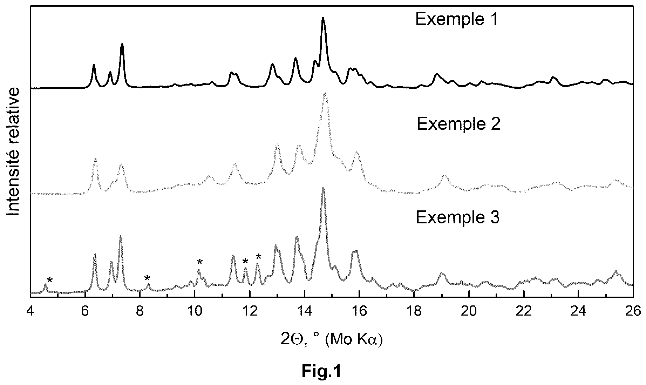

La figure 1 représente les diffractogrammes, avec une ordonnée en échelle arbitraire, des exemples 1 à 3 décrits ci-après.

La composition chimique est obtenue par spectrométrie de torche à plasma.

L'analyse des performances d'électrodes du matériau est réalisée par cyclage galvanostatique d'électrodes sèches comportant pour un total de 100 % en masse : 75 % de matériau selon l'invention, 20 % de noir de carbone et 5 % de Polytétrafluoroéthylène.

**Exemple 1**

0,3936 g de $Na_3PO_4$ et 0,7934 g de $FeSO_4$ (ratio molaire 1:2) ont été broyés dans un broyeur à billes à haute énergie de référence SPEX 8000M commercialisé par la société SPEX, doté de billes en $ZrO_2$. La durée de broyage a été de 1 h. Le rapport entre la masse des billes sur la masse totale des poudres de $Na_3PO_4$ et $FeSO_4$ était de 20, le broyeur opérant à un rythme de 875 cycles par minute.

Le broyat a ensuite été compacté sous la forme d'une pastille puis recuit sous atmosphère inerte pendant 15 h à 450 °C.

La pastille ainsi recuite a ensuite été broyée dans un broyeur à billes pendant 40 minutes. La poudre obtenue a été recuite à 400 °C pendant 20 h.

Un matériau selon l'invention de formule $Na_{2.53}Fe_{2.2}PO_4(SO_4)_2$ a ainsi été synthétisé. Il a en outre été déterminé que le matériau présente une structure cristallographique décrite dans le groupe d'espace C2/c avec comme paramètres de maille : a=12,28(1) Å, b=12,83(2) Å, c=6,63(1) Å, β=115,6(1)° qui sont caractéristiques de la structure alluaudite.

Par ailleurs, une mesure par spectroscopie d'émission optique à plasma à couplage inductif (ICP-OES) a permis de caractériser les rapports molaires élémentaires Na/S=1,55, P/S=0,49 et Fe/S=1,04 avec une erreur de 0,03, proche respectivement des valeurs de 1,5, 0,5 et 1 du matériau de référence de structure alluaudite de formule $Na_3Fe_2PO_4(SO_4)_2$.

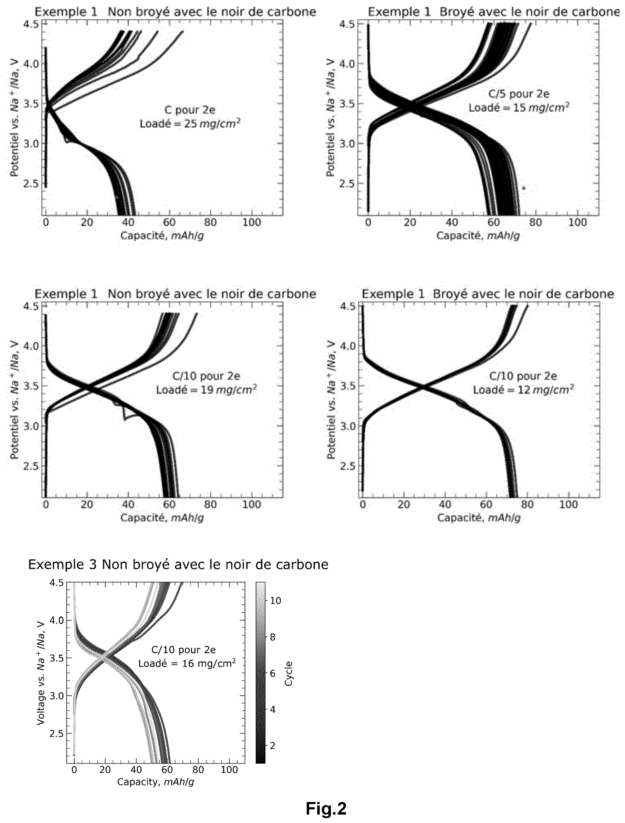

La figure 2 présente pour différentes électrodes sèches, l'évolution de la tension *vs.* le couple $Na^+/Na$, exprimée en V, en fonction de la capacité, exprimée en mAh/g, et en fonction du nombre de cycles et pour différents régimes de charge C/n, avec n=10, 15 et 20 (échange de 2 $Na^+$ respectivement en 10 h, 15 h et 20 h) et pour différentes quantités de matière active par unité de surface, 12, 15, 19 et 25 g/cm$^2$. Toutes les électrodes ont été obtenues sans broyer le matériau avec du noir de carbone, mélangé dans un mortier, sauf celle testée à un régime de charge de C/10 et une quantité de matière par unité de surface de 12 mg/cm$^2$.

Le matériau présente ainsi un bon comportement au cours des charges et décharges successives, notamment pour des électrodes fortement chargées en matière activé, *i.e.* épaisses.

**Exemple 2**

0,5859 g de $Na_3PO_4$ et 1,08963 g de $FeSO_4$ ont été broyés dans un micro-broyeur planétaire de référence Pulverisette 7 commercialisé par la société Fritsch, doté de billes en $ZrO_2$. La durée de broyage a été de 20 h. Le rapport de la masse des billes sur la masse totale des poudres de $Na_3PO_4$ et $FeSO_4$ était de 25. La vitesse de rotation du broyeur était de 750 rpm [rotations par minute].

Un matériau selon l'invention a ainsi été synthétisé. Il présente une structure cristallographique décrite dans le groupe d'espace C2/c avec comme paramètres de maille : a=12,18(1) Å, b=12,72(1) Å, c=6,53(1) Å et β=115,1(1)° qui sont caractéristiques de la structure alluaudite.

**Exemple 3**

0,3936 g de $Na_3PO_4$ et de 0,7934 g $FeSO_4$ ont été broyés dans un broyeur à billes à haute énergie de référence SPEX 8000M commercialisé par la société SPEX, doté de billes en $ZrO_2$. La durée de broyage a été de 1 h. Le rapport de la masse des billes sur la masse totale des poudres de $Na_3PO_4$ et $FeSO_4$ était de 20.

Dans un réacteur en Teflon, sous atmosphère inerte, le broyat a été dispersé dans 7 ml de 1-Ethyl-2,3-dimethylimidazolium-bis(trifluoromethanesulfonyl)imide.

La solution ainsi obtenue a été agitée pendant 15 minutes pour favoriser la dispersion du broyat dans le liquide. L'ensemble a été chauffé à 250 °C pendant 24 h.

Un agrégat a ainsi été obtenu, extrait du réacteur et lavé avec de l'acétone.

Un matériau selon l'invention a été formé dont la structure est décrite dans le groupe d'espace C2/c avec comme paramètres de maille : a=12,32(1) Å, b=12,81(1) Å, c=6,58(1) Å, β=115,3(1)° caractéristiques de la structure alluaudite.

**Revendications**

1. Matériau de structure cristallographique de type alluaudite de formule

$$A_{3-\delta 1}M_{2+\delta 2}(PO_4)_n(SO_4)_m$$

dans laquelle :

- M est un métal de transition choisi parmi le fer (Fe), le manganèse (Mn), le cobalt (Co), le nickel (Ni) et leurs mélanges,
- A est un alcalin choisi parmi le sodium (Na), le lithium (Li), le potassium (K) et leurs mélanges,
- le degré d'oxydation moyen d du métal de transition M étant compris entre +2 et +2,30,
- n, m, δ1 et δ2 étant des coefficients qui remplissent les conditions suivantes :

  ◦

$$0 \leq \delta 1 \leq 0,50,$$

  ◦

$$0 \leq \delta 2 \leq 0,30$$

et

°

$$n + m = 3$$

avec n > 0 et m > 0.

**2.** Matériau selon la revendication 1, M étant choisi parmi le fer (Fe), le manganèse (Mn) et leurs mélanges.

**3.** Matériau selon l'une quelconque des revendications 1 et 2, M étant le fer (Fe) ou le manganèse (Mn).

**4.** Matériau selon l'une quelconque des revendications précédentes, A étant le sodium (Na).

**5.** Matériau selon l'une quelconque des revendications précédentes, dans lequel $\delta1 = 2 * \delta2$.

**6.** Matériau selon l'une quelconque des revendications précédentes, dans lequel d ≤ +2,20, de préférence d ≤ +2,14, de préférence d ≤ +2,08.

**7.** Matériau selon l'une quelconque des revendications précédentes, dans lequel $\delta1$ est supérieur à 0,10, voire supérieur à 0,20, voire supérieur à 0,30, voire supérieur à 0,40, et/ou $\delta1$ est inférieur à 0,50, voire inférieur à 0,40, voire inférieur à 0,30, voire inférieur à 0,20, voire inférieur à 0,10.

**8.** Matériau selon l'une quelconque des revendications précédentes, dans lequel $\delta2$ est supérieur à 0,05, voire supérieur à 0,10, voire supérieur à 0,15, voire supérieur à 0,20, voire supérieur à 0,25, et/ou $\delta2$ est inférieur à 0,25, voire inférieur à 0,20, voire inférieur à 0,15, voire inférieur à 0,10, voire inférieur à 0,05.

**9.** Procédé de fabrication du matériau selon l'une quelconque des revendications précédentes, le procédé comprenant :

a) la préparation d'une charge de départ comportant, à titre de constituants, un précurseur phosphaté comportant des groupes phosphates $PO_4$ et le métal alcalin A, et un précurseur sulfaté comportant des groupes sulfates $SO_4$ et le métal de transition M,
b) la mise en œuvre, sous atmosphère inerte, d'au moins une technique choisie parmi un broyage, notamment un broyage à haute énergie, un frittage et une synthèse ionothermale, pour faire réagir entre eux le précurseur phosphaté et le précurseur sulfaté jusqu'à obtention d'un matériau, la composition de la charge de départ à l'étape a) étant déterminée de telle sorte que le matériau obtenu à l'étape b) est selon l'une quelconque des revendications précédentes.

**10.** Procédé selon la revendication précédente, le rapport molaire $A/PO_4$ du nombre de moles du métal alcalin sur le nombre de moles de groupes phosphates $PO_4$ dans le précurseur phosphaté étant compris entre 1 et 3, notamment égal à 3.

**11.** Procédé selon la revendication 10 ou 11, le rapport molaire $M/SO_4$ du nombre de moles du métal alcalin sur le nombre de moles de groupes sulfates $SO_4$ dans le précurseur sulfaté étant compris entre 1 et 2, notamment égal à 1.

**12.** Procédé selon la revendication précédente, la charge de départ comportant, voire consistant en, un mélange des précurseurs sulfaté et phosphaté, en particulier formé à partir d'une poudre comportant, voire consistant en, des particules faites du précurseur sulfaté et d'une poudre comportant, voire consistant en, des particules faites du précurseur phosphaté.

**13.** Procédé selon l'une quelconque des revendications 9 à 12, l'étape b) comportant, voire consistant en, le broyage de la charge de départ.

**14.** Procédé selon la revendication précédente, le broyage étant effectué dans un broyeur à billes, un broyeur planétaire ou un broyeur à rouleaux.

**15.** Procédé selon l'une quelconque des revendications 13 et 14, l'étape b) comportant un recuit postérieurement au broyage.

**16.** Procédé selon la revendication précédente, le frittage est postérieur au broyage, le procédé comportant notamment la préparation d'une préforme par compactage de la charge de départ broyée et le frittage de la préforme.

**17.** Procédé selon l'une quelconque des revendications 9 à 12, la mise en œuvre à l'étape b) comportant une synthèse ionothermale, de préférence consécutive au broyage.

**18.** Procédé selon la revendication précédente, la synthèse ionothermale comportant la dispersion de la charge de départ, optionnellement broyée, dans un solvant ionique, par exemple étant le 1-Ethyl-2,3-dimethylimidazolium-bis(trifluoromethanesulfonyl)imide, et le chauffage de la dispersion à une température comprise entre 160°C et 260°C, par exemple égale à 250°C, et pendant une durée comprise entre 5 h et 48 h, par exemple 24 h.

**19.** Cathode de batterie, notamment choisie parmi une cathode de batterie lithium-ion (Li-ion), une cathode de batterie sodium-ion (Na-ion), une cathode de batterie potassium-ion (K-ion), une cathode de batterie au lithium (Li), une cathode de batterie au sodium (Na) et une cathode de batterie au potassium (K), ladite cathode de batterie comportant le matériau selon l'une quelconque des revendications 1 à 9 ou obtenu par le procédé selon l'une quelconque des revendications 10 à 18.

**20.** Batterie, de préférence choisie parmi une batterie lithium-ion (Li-ion), une batterie sodium-ion (Na-ion), une batterie potassium-ion (K-ion), une batterie au sodium (Na), une batterie au lithium (Li), une batterie au potassium (K), la batterie comportant une cathode de batterie selon la revendication précédente.

Fig.1

Fig.2

**RAPPORT DE RECHERCHE EUROPEENNE**

Numéro de la demande

EP 25 16 6889

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LU JIECHEN ET AL: "Polyanionic Solid-Solution Cathodes for Rechargeable Batteries", CHEMISTRY OF MATERIALS, vol. 29, no. 8, 5 avril 2017 (2017-04-05), pages 3597-3602, XP093215940, US ISSN: 0897-4756, DOI: 10.1021/acs.chemmater.7b00226 | 1-16,19, 20 | INV. C01B25/45 H01M4/02 H01M4/50 H01M4/52 |
| Y | * alinéa [experimental] - alinéa [conclusions] * <br> * figures 1-4 * <br> * tableau 1 * <br> ----- | 1-20 | |
| Y | DWIBEDI DEBASMITA ET AL: "Ionothermal Synthesis of High-Voltage Alluaudite Na 2+2x Fe 2-x (SO 4 ) 3 Sodium Insertion Compound: Structural, Electronic, and Magnetic Insights", APPLIED MATERIALS & INTERFACES , vol. 8, no. 11 23 mars 2016 (2016-03-23), pages 6982-6991, XP093215887, US ISSN: 1944-8244, DOI: 10.1021/acsami.5b11302 Extrait de l'Internet: URL:https://pubs.acs.org/doi/pdf/10.1021/a csami.5b11302 * alinéa [experimental] - alinéa [conclusions] * <br> ----- | 1-20 | **DOMAINES TECHNIQUES RECHERCHES (IPC)** <br><br> C01B <br> H01M |

-/--

Le présent rapport a été établi pour toutes les revendications

| Lieu de la recherche | Date d'achèvement de la recherche | Examinateur |
|---|---|---|
| La Haye | 4 juillet 2025 | Marino, Emanuela |

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

EP 25 16 6889

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | OYAMA GOSUKE ET AL: "Off-Stoichiometry in Alluaudite-Type Sodium Iron Sulfate Na 2+2 x Fe 2- x (SO 4 ) 3 as an Advanced Sodium Battery Cathode Material", CHEMELECTROCHEM , vol. 2, no. 7 15 avril 2015 (2015-04-15), pages 1019-1023, XP093215894, Chichester ISSN: 2196-0216, DOI: 10.1002/celc.201500036 Extrait de l'Internet: URL:https://chemistry-europe.onlinelibrary .wiley.com/doi/pdfdirect/10.1002/celc.2015 00036 * page 1020, alinéa results - page 1023 * ----- | 1-20 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 4 juillet 2025 | Marino, Emanuela |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................................
& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **RICHARDSON et al.** *Journal of Power Sources*, 2003, vol. 119 (121), 262-265
- **BARPANDA et al.** *Nat Commun*, 2014, vol. 5 (5), 4358
- **J. LU et al.** *Chemistry of Materials*, 2017, vol. 29, 3597-3602
- **BARPANDA et al.** *Nat Commun*, 2014, vol. 5, 4358